# FASCICULE DE BREVET EUROPEEN

(11) **EP 3 333 440 B1**
(45) Date de publication et mention de la délivrance du brevet: **13.03.2019**
(21) Numéro de dépôt: 17204600.5
(22) Date de dépôt: 30.11.2017
(51) Int. Cl.: F16D 41/04, F16D 47/04, B60K 6/48

(54) **DISPOSITIF DE TRANSMISSION DE COUPLE, NOTAMMENT POUR VEHICULE AUTOMOBILE**
DREHMOMENTÜBERTRAGUNGSVORRICHTUNG, INSBESONDERE FÜR KRAFTFAHRZEUG
TORQUE TRANSMISSION DEVICE, IN PARTICULAR FOR A MOTOR VEHICLE

(30) Priorité: 09.12.2016 FR 1662221
(43) Date de publication de la demande: 13.06.2018
(73) Titulaire: Valeo Embrayages, 80009 Amiens Cedex 2 (FR)
(72) Inventeur: LEBAS, Gilles, 80009 AMIENS (FR); COMMEINE, Emmanuel, 80009 AMIENS (FR)
(74) Mandataire: Vincent, Catherine Marie Marguerite

(56) Documents cités:
- WO-A1-2016/165701
- DE-A1-102007 061 895
- DE-A1-102012 206 680

## Description

La présente invention concerne un dispositif de transmission de couple, notamment pour véhicule automobile, ainsi qu'un système de motorisation hybride équipé d'un tel dispositif.

On connaît un dispositif de transmission pour véhicule automobile hybride, comprenant deux embrayages et une machine électrique, disposés entre le moteur à combustion interne du véhicule et sa boîte de vitesses. Un tel dispositif est, par exemple, décrit dans le document FR 2 830 589. Chacun des embrayages comporte un disque de friction, une butée d'embrayage et un plateau de pression monté mobile axialement par rapport audit plateau de réaction entre une position embrayée dans laquelle le disque de friction est pincé entre lesdits plateaux de pression et de réaction et une position débrayée. Les deux embrayages sont disposés de part et d'autre de la machine électrique. Le plateau de pression d'un premier embrayage, disposé côté moteur, est configuré pour être associé au vilebrequin du moteur à combustion interne. Le disque de friction du premier embrayage est monté solidaire en rotation d'un arbre intermédiaire qui est fixé à un moyeu de support du rotor de la machine électrique. Le plateau de pression ainsi que le plateau de réaction du second embrayage, disposé côté de la boîte de vitesses, sont montés solidaires en rotation dudit moyeu de support du rotor et le disque de friction dudit second embrayage est destiné à coopérer avec un arbre d'entrée d'une boîte de vitesses.

L'embrayage, côté moteur, permet donc d'accoupler en rotation le vilebrequin du moteur à combustion au rotor de la machine électrique et l'embrayage, côté boîte de vitesses, permet d'accoupler le rotor à l'arbre d'entrée de la boîte de vitesses. Ainsi, on peut couper le moteur à combustion interne à chaque arrêt et le redémarrer grâce à la machine électrique. La machine électrique peut également constituer un frein électrique ou apporter un surplus d'énergie au moteur à combustion pour l'assister ou éviter que celui-ci ne cale. Lorsque le moteur à combustion interne tourne, la machine électrique joue le rôle d'un alternateur ou d'un générateur de couple électrique.

La machine électrique peut être une machine électrique tournante réversible du type alterno-démarreur ou du type moteur-générateur. Dans un mode de fonctionnement de type démarreur, l'embrayage situé côté moteur est embrayé et la machine électrique permet le démarrage du moteur à combustion interne. Dans un mode de fonctionnement de type alternateur, la machine électrique permet de recharger une batterie du véhicule et/ou d'alimenter les organes ou équipements consommateurs d'énergie lorsque le moteur à combustion interne tourne. Elle est en outre configurée pour récupérer de l'énergie lors du freinage du véhicule. La machine électrique peut notamment être configurée pour arrêter le moteur à combustion interne, par exemple, au feu rouge ou dans les bouchons, et le redémarrer ensuite (Fonction Stop and Go en Anglais). Dans un mode de réalisation, elle est apte à fournir un surplus de puissance permettant d'éviter que le moteur cale (fonction boost en Anglais). Par ailleurs, la machine électrique peut être apte à entraîner le véhicule, au moins sur une courte distance, l'embrayage situé du côté moteur étant alors désengagé et le moteur à combustion interne arrêté.

Un tel dispositif est relativement complexe, onéreux et encombrant.

La demande de brevet DE 10 2015 211 436 divulgue un dispositif de transmission pour véhicule hybride comportant notamment :
- un volant d'entrée de couple, solidaire en rotation d'un vilebrequin d'un moteur à combustion interne,
- un moyeu de sortie de couple, solidaire en rotation d'un arbre d'entrée d'une boîte de vitesses,
- un support solidaire en rotation d'un rotor d'une machine électrique,
- des moyens de commande aptes à coupler en rotation le volant et le rotor au travers d'un premier chemin de passage de couple comportant des moyens d'amortissement élastique et dépourvu de moyens d'embrayage, dans un premier mode de fonctionnement, lesdits moyens de commande étant aptes à coupler en rotation le volant, le rotor et l'arbre d'entrée de la boîte de vitesses au travers d'un second chemin de passage de couple comportant lesdits moyens d'amortissement élastique et des moyens d'embrayage, dans un second mode de fonctionnement.

Ainsi, dans le premier mode de fonctionnement, la machine électrique, et plus particulièrement le rotor, peut entraîner en rotation le vilebrequin de façon à redémarrer le moteur électrique si celui-ci a été arrêté (Fonction Stop and Go en Anglais). Par ailleurs, dans le second mode de fonctionnement, si les moyens d'embrayage sont en position embrayée, l'arbre d'entrée de la boîte de vitesses peut être entraîné en rotation par le moteur thermique.

Dans le premier mode de fonctionnement, le couplage entre le volant et le rotor est réalisé à l'aide d'organes dentés. Lors d'un tel couplage en rotation, il est important de maîtriser le couple transmis du rotor au volant, au risque de générer des à-coups et détériorer de façon prématurée lesdits organes dentés et/ou le moteur thermique. Un tel contrôle du couple est, dans la pratique, complexe à réaliser.

La demande de brevet DE 10 2012 206 680 divulgue un dispositif de transmission pour véhicule hybride comportant notamment un embrayage et une roue libre.

L'invention a notamment pour but d'apporter une solution simple, efficace et économique aux problèmes précités.

A cet effet, elle propose un dispositif de transmission de couple, notamment pour véhicule automobile, comportant :
- des moyens d'entrée de couple, destinés à être couplés en rotation à un vilebrequin d'un moteur à combustion interne,
- des moyens de sortie de couple, destinés à être couplés en rotation à un arbre d'entrée d'une boîte de vitesses et à un rotor d'une machine électrique, les moyens d'entrée de couple étant aptes à pivoter par rapport aux moyens de sortie de couple autour d'un axe,
- des moyens d'embrayage comportant une alternance de plateaux et de disques de friction ainsi qu'un diaphragme apte à basculer entre une position embrayée dans laquelle il tend à enserrer les disques de friction entre les plateaux, et une position débrayée dans laquelle il libère les disques de friction,
- une butée d'embrayage comportant un organe d'actionnement mobile entre une première position axiale et une seconde position axiale, l'organe d'actionnement est en appui sur le diaphragme par l'intermédiaire d'au moins un organe pousseur, l'organe pousseur étant monté axialement entre deux paliers,
le dispositif comporte un mécanisme de roue libre comportant une première partie et une seconde partie, ledit mécanisme étant apte à transmettre du couple de la première partie à la seconde partie, dans un premier sens de rotation de la première partie par rapport à la seconde partie, ledit mécanisme étant apte à découpler en rotation la première partie et la seconde partie dans un sens de rotation, opposé au premier sens de rotation.

La roue libre permet un passage de couple plus important que des moyens d'embrayage par friction dans un espace donné. Le second chemin de passage de couple est notamment dépourvu de moyens d'embrayage par friction.

Le fait que l'organe pousseur soit monté axialement entre deux paliers permet de gérer deux différentiels de vitesse, à savoir un premier différentiel de vitesse entre le diaphragme et l'organe pousseur et un deuxième différentiel de vitesse entre l'organe pousseur et l'organe d'actionnement mobile. Ces deux différentiels de vitesses sont liées au fait que l'organe d'actionnement mobile est lié en rotation à un élément de la roue libre.

Les moyens d'embrayage peuvent être des moyens d'embrayage par friction permettant une synchronisation des vitesses progressive.

Selon un aspect de l'invention, le dispositif est agencé de sorte que :
- dans la première position de l'organe d'actionnement et lors de la rotation de la première partie du mécanisme de roue libre par rapport à la seconde partie dans le second sens de rotation, les moyens d'entrée de couple et les moyens de sortie de couple sont couplés en rotation uniquement par un premier chemin de passage de couple comportant des moyens d'embrayage,
- dans la seconde position de l'organe d'actionnement et lors de la rotation de la première partie du mécanisme de roue libre par rapport à la seconde partie dans le premier sens de rotation, les moyens d'entrée de couple et les moyens de sortie de couple sont couplés en rotation uniquement par un second chemin de passage de couple comprenant le mécanisme de roue libre.

Ainsi, dans la première position de l'organe d'actionnement et lors de la rotation de la première partie du mécanisme de roue libre par rapport à la seconde partie dans le second sens de rotation, le vilebrequin peut être entraîné en rotation par le rotor de la machine électrique, de manière à pouvoir redémarrer le moteur thermique si celui-ci a été arrêté par exemple, par l'intermédiaire des moyens d'embrayage qui permettent de contrôler efficacement et simplement le couple fourni au vilebrequin. On évite ainsi les à-coups et tout risque de détérioration du moteur thermique et du dispositif de transmission de couple.

Selon un aspect de l'invention, le passage du premier chemin de passage de couple au second chemin de passage de couple ne peut se faire que lorsque la différence de vitesses des moyens d'entrée et des moyens de sortie n'excède pas 100 tr/min.

Selon un autre aspect de l'invention, dans la première position de l'organe d'actionnement et lors de la rotation de la première partie du mécanisme de roue libre par rapport à la seconde partie dans le premier sens de rotation, les moyens d'entrée de couple et les moyens de sortie de couple peuvent être couplés en rotation uniquement par le premier chemin de passage de couple comportant les moyens d'embrayage, notamment pour synchroniser les vitesses de moyens d'entrée et de sortie avant que le couple ne passe par le second chemin de passage de couple.

Par ailleurs, dans la seconde position de l'organe d'actionnement et lors de la rotation de la première partie du mécanisme de roue libre par rapport à la seconde partie dans le premier sens de rotation, l'arbre d'entrée de la boîte de vitesses peut être entraîné à l'aide du moteur thermique, lorsque celui-ci est démarré.

L'organe d'actionnement mobile et le mécanisme de roue libre peuvent être agencés de manière à ce que, dans la seconde position de l'organe d'actionnement et lors de la rotation de la première partie du mécanisme de roue libre par rapport à la seconde partie dans le second sens de rotation, les moyens d'entrée de couple et les moyens de sortie de couple sont découplés en rotation.

Ce mode de fonctionnement correspond ainsi à un mode dit neutre. Dans un tel mode de fonctionnement, la machine électrique peut par exemple être apte à entraîner l'arbre d'entrée de la boîte de vitesses, et donc le véhicule, au moins sur une courte distance.

Le dispositif peut comporter un organe de transmission comprenant une première zone de couplage destinée à être couplée en rotation à l'arbre d'entrée de la boîte de vitesses, et une seconde zone de couplage couplée à la seconde partie du mécanisme de roue libre, la première partie du mécanisme de roue libre étant couplée aux moyens d'entrée de couple.

Dans ce cas, la première zone de couplage peut être située radialement à l'intérieur de l'organe de transmission, la seconde zone de couplage étant située radialement à l'extérieur de l'organe de transmission.

Les moyens d'embrayage peuvent comporter au moins deux plateaux et au moins un disque de friction situé axialement entre les deux plateaux, le disque de friction, ou respectivement les plateaux, étant couplé en rotation à un moyeu appartenant aux moyens de sortie de couple, les plateaux, respectivement le disque de friction, étant couplés aux moyens d'entrée de couple, les plateaux étant rapprochés axialement l'un de l'autre de façon à enserrer le disque de friction lorsque l'organe d'actionnement est déplacé dans sa première position.

De manière générale, les moyens d'embrayage peuvent comporter une alternance de plateaux et de disques de friction.

Les moyens d'embrayage peuvent comporter un diaphragme apte à basculer entre une position embrayée dans laquelle il tend à enserrer les disques de friction entre les plateaux, et une position débrayée dans laquelle il libère les disques de friction, l'organe d'actionnement étant apte à venir en appui sur le diaphragme de manière à le déplacer vers sa position embrayée dans la première position de l'organe d'actionnement.

Le diaphragme peut être annulaire, l'organe d'actionnement venant en appui sur la périphérie radialement interne du diaphragme dans la première position axiale, le diaphragme étant monté basculant autour d'une première zone d'appui radialement externe, le diaphragme venant en appui sur l'un des plateaux, directement ou indirectement, dans une seconde zone d'appui située radialement à l'intérieur de la première zone d'appui.

Une telle structure correspond ainsi à un embrayage de type normalement ouvert. L'élasticité du diaphragme est telle que, lorsqu'il n'est pas sollicité par l'organe d'actionnement, il est rappelé vers sa position de repos, à savoir sa position ouverte ou débrayée.

Bien entendu, les points d'appui peuvent être disposés différemment, dans le cas d'un embrayage de type normalement fermé. Dans ce cas, lorsque le diaphragme n'est pas sollicité par l'organe d'actionnement (position de repos), le diaphragme est rappelé vers sa position fermée ou embrayée.

Les moyens d'entrée de couple peuvent comporter un couvercle logeant, au moins en partie, les moyens d'embrayage, les organes d'actionnement, l'organe de transmission, le mécanisme de roue libre et/ou le moyeu.

Les moyens d'entrée de couple peuvent comporter un organe de liaison couplé en rotation au couvercle, la seconde zone de couplage de l'organe de transmission et l'organe de liaison étant couplés en rotation, par l'intermédiaire du mécanisme de roue libre.

L'organe d'actionnement peut être annulaire et entourer l'arbre d'entrée de la boîte de vitesses.

L'organe pousseur peut traverser axialement un orifice de l'organe de transmission, ledit organe pousseur étant apte à être déplacé axialement par rapport audit organe de transmission.

L'organe pousseur est par exemple formé par une tige cylindrique.

Le dispositif peut également comporter l'une ou plusieurs des caractéristiques suivantes :
- la première zone de couplage est radialement interne et comporte des cannelures ou des dents aptes à coopérer avec des cannelures complémentaires de l'arbre d'entrée de la boîte de vitesses,
- l'organe de liaison comporte des dents ou des cannelures radialement externes, aptes à coopérer avec des cannelures du couvercle de manière à coupler en rotation l'organe de liaison et le couvercle,
- l'organe de liaison est maintenu axialement par rapport au couvercle, entre deux anneaux élastiques ou circlips montés dans des gorges du couvercle,
- la première zone d'appui du diaphragme est formée par une bague venant en appui sur un anneau élastique ou circlip monté dans une gorge du couvercle,
- le couvercle comporte une partie radiale dont la périphérie radialement externe est prolongée par une partie cylindrique,
- au moins l'un des plateaux des moyens d'embrayage est apte à venir en appui axial, directement ou indirectement, sur la partie radiale du couvercle,
- au moins un palier, par exemple une butée à roulement, est monté axialement entre l'organe de transmission et le diaphragme,
- l'organe pousseur est solidaire en rotation de l'organe de transmission, notamment avec un jeu circonférentiel,
- l'organe pousseur est monté coulissant axialement dans, par l'intermédiaire ou non, d'un palier lisse de l'organe de transmission,
- l'organe d'actionnement est en appui sur l'organe pousseur par l'intermédiaire d'un palier, par exemple une butée à roulement,
- l'organe pousseur est en appui sur le diaphragme par l'intermédiaire d'un palier, par exemple une butée à roulement.

L'invention concerne également un système de motorisation hybride comprenant :
- un moteur à combustion interne comportant un vilebrequin apte à être entraîné en rotation autour d'un axe,
- une machine électrique comportant un stator et un rotor apte à être entraîné en rotation par rapport au stator autour de l'axe,
- une boîte de vitesses comportant un arbre d'entrée,
- un dispositif de transmission de couple du type précité, le rotor, l'arbre d'entrée de la boîte de vitesses et les moyens de sortie de couple étant couplés en rotation,
- les moyens d'entrée de couple et le vilebrequin étant couplés en rotation.

L'invention sera mieux comprise et d'autres détails, caractéristiques et avantages de l'invention apparaîtront à la lecture de la description suivante faite à titre d'exemple non limitatif en référence aux dessins annexés dans lesquels :
- les figures 1 et 2 sont des vues en perspective avec écorché partiel d'un dispositif de transmission de couple selon une forme de réalisation de l'invention,
- les figures 3 et 4 sont des vues en coupe axiale du dispositif de la figure 1, dans deux positions axiales de l'organe d'actionnement, le rotor, le moteur thermique et la boîte de vitesses ayant été représentés schématiquement.

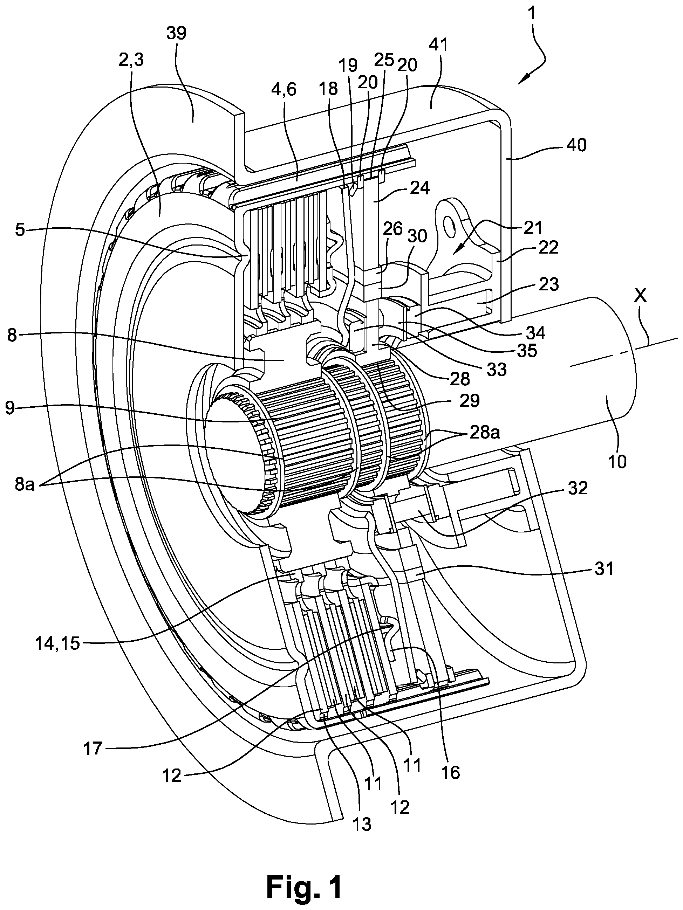

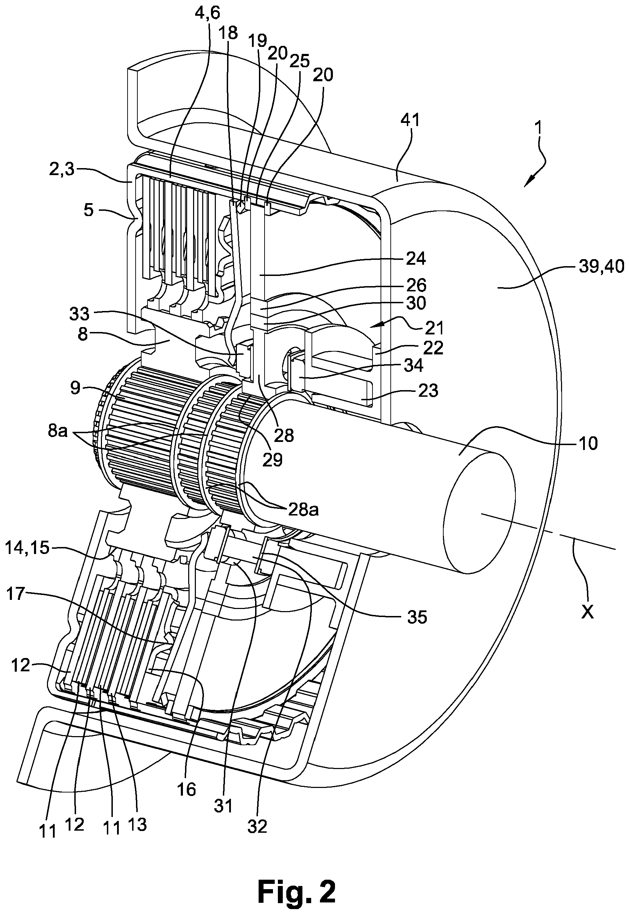

Les figures 1 à 4 représentent un dispositif de transmission de couple 1, notamment pour véhicule automobile, selon une forme de réalisation de l'invention.

Celui-ci comporte un couvercle 2 d'axe X, comprenant une partie radiale 3 annulaire dont la périphérie radialement externe est prolongée par une partie cylindrique 4 s'étendant vers l'avant.

Les termes « radial », « axial » et « circonférentiel » sont définis par rapport à l'axe X. Les termes « avant » et « arrière » sont définis par rapport à la boite de vitesses, « avant » signifiant en rapprochement de la boite de vitesses.

La face avant de la partie radiale 3 comporte une zone d'appui 5 en saillie et de forme annulaire, de section arrondie. La zone d'appui 5 est par exemple formée par déformation de la matière du couvercle, par exemple par emboutissage.

La partie cylindrique 4 comporte une succession de cannelures 6 s'étendant axialement et réparties sur toute la circonférence.

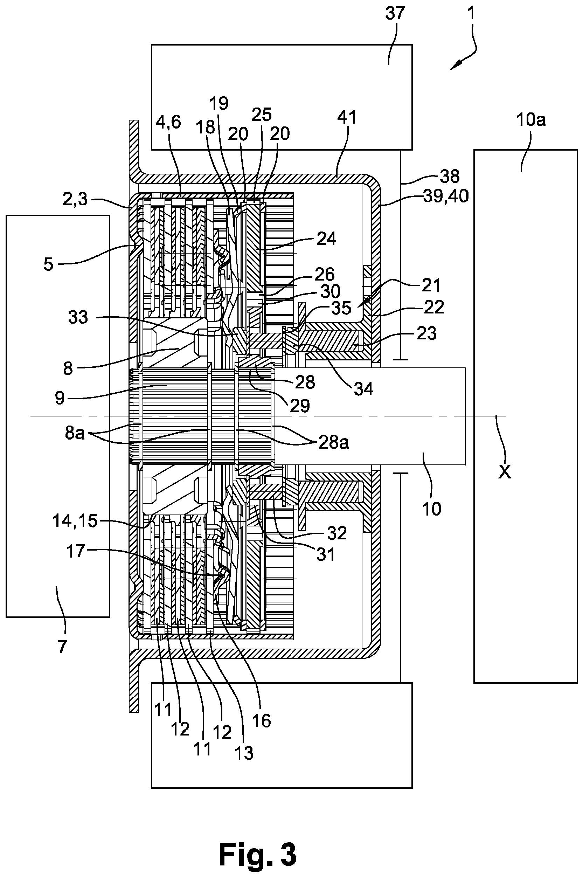

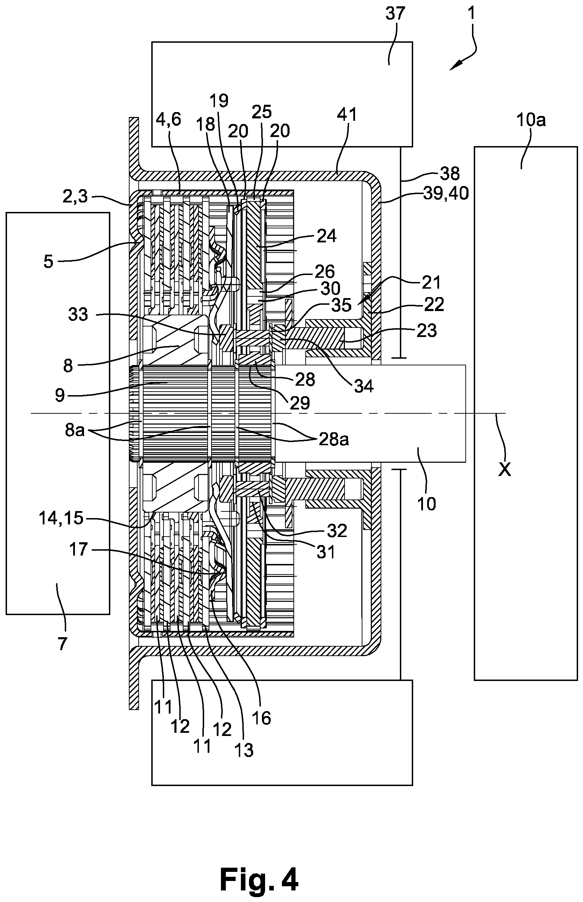

La partie radiale est destinée à être couplée en rotation directement ou indirectement à un vilebrequin d'un moteur à combustion interne 7 (figures 3 et 4).

Le dispositif 1 comporte en outre des moyens d'embrayage comportant un moyeu central 8 dont la périphérie radialement interne est cannelée et coopère avec des cannelures 9 d'un arbre d'entrée 10 d'une boîte de vitesses 10a. Le moyeu central 8 et l'arbre d'entrée 10 de la boîte de vitesses sont ainsi couplés en rotation.

Les moyens d'embrayage comportent en outre des disques de friction 11 intercalés entre des plateaux annulaires 12.

Dans la forme de réalisation représentée, les moyens d'embrayage comportent quatre plateaux 12 et trois disques de frictions 11, les plateaux 12 et les disques de friction 11 étant montés en alternance.

Les périphéries externes des plateaux 12 comportent des dents 13 aptes à venir en prise dans les cannelures 6 du couvercle 2, de façon à coupler en rotation les plateaux 12 et le couvercle 2 tout en autorisant le déplacement axial des plateaux 12.

Les périphéries internes des disques de friction 11 comportent des dents 14 aptes à venir en prise avec des cannelures 15 de la périphérie radialement externe du moyeu central 8 de manière à coupler en rotation les disques de friction 11 et le moyeu central 8 tout en autorisant un déplacement axial des disques de friction 11 par rapport au moyeu 8.

Le plateau 12 arrière est apte à venir en appui sur la partie radiale 3 du couvercle 2, en particulier sur la zone annulaire en saillie 5 du couvercle 2.

Un organe d'appui 16 est monté en avant du plateau 12 avant, l'organe d'appui 16 comportant une partie d'appui 17 annulaire en saillie vers l'avant.

Les moyens d'embrayage comportent en outre un diaphragme 18 dont la périphérie externe est apte à venir en appui sur une rondelle conique 19, située directement en avant du diaphragme 18, ladite rondelle 19 étant elle-même en appui sur un anneau élastique ou circlip 20, monté en avant de la rondelle conique 19, dans une gorge ménagée dans la partie cylindrique 4 du couvercle 2. La rondelle d'appui conique 19 est donc fixe axialement par rapport au couvercle 2.

La zone d'appui 17 de l'organe 16 est apte à prendre appui sur le diaphragme 18, dans une zone située radialement à l'intérieur de la rondelle d'appui conique 19.

Le dispositif 1 comporte en outre des moyens d'actionnement comportant une butée d'embrayage 21. Ladite butée d'embrayage 21 comporte une partie 22 fixe par rapport au couvercle 2, un organe d'actionnement 23 mobile par rapport à la partie fixe 22 dans la direction axiale. L'organe d'actionnement 23 présente une forme annulaire et peut être formé par un piston logé dans une chambre de la partie fixe 22, par exemple.

Un organe de liaison 24 est monté à l'intérieur de la partie cylindrique 4 du couvercle 2. L'organe de liaison 24 est annulaire, s'étend radialement et comporte des dents 25 à sa périphérie radialement externe et est couplé à une première partie 26 d'un mécanisme de roue libre. Les dents 25 de la périphérie radialement externe coopèrent avec les cannelures 6 de la partie cylindrique 4 du couvercle 2 de manière à coupler en rotation l'organe de liaison 24 et le couvercle 2. L'organe de liaison 24 est maintenu axialement entre deux organes élastiques ou circlips 20 disposés respectivement à l'avant et à l'arrière, montés dans des gorges du couvercle 2.

Un organe de transmission 28 annulaire est monté autour de l'arbre d'entrée 10 de la boîte de vitesses. L'organe de transmission 28 s'étend radialement, comporte des dents 29 à sa périphérie radialement interne et est couplé à une seconde partie 30 du mécanisme de roue libre. Les dents 29 de la périphérie radialement interne coopèrent avec les cannelures 9 de l'arbre d'entrée 10 de la boîte de vitesses.

Ledit mécanisme de roue libre est apte à transmettre du couple de la première partie 29 à la seconde partie 30, dans un premier sens de rotation de la première partie 29 par rapport à la seconde partie 30, ledit mécanisme étant apte à découpler en rotation la première partie 29 et la seconde partie 30 dans un sens de rotation, opposé au premier sens de rotation.

Le moyeu 8 et l'organe de transmission 28 sont maintenus axialement en position sur l'axe 10, par l'intermédiaire d'anneaux élastiques de type circlips 8a, 28a montés dans des gorges de l'arbre 10.

L'organe de transmission 28 comporte au moins un orifice 31, par exemple trois orifices régulièrement répartis autour de l'axe X.

Chaque orifice 31 est traversé par un organe pousseur 32 apte à coulisser axialement au travers dudit orifice 31.

Chaque organe pousseur 32 est monté axialement entre deux paliers 33, 34 formés ici par des butées à roulement, plus particulièrement des butées à aiguilles. Un premier palier 33 est intercalé axialement entre la périphérie radialement interne du diaphragme 18 et l'organe pousseur 32. Un second palier 34 est intercalé axialement entre l'organe pousseur 32 et l'organe d'actionnement 23. Une rondelle 35 peut être intercalée axialement entre chaque palier 33, 34 et l'organe pousseur 32.

De cette manière, l'organe pousseur 32 est déplacé axialement avec l'organe d'actionnement de la butée d'embrayage 21. L'organe pousseur 32 est aussi solidaire en rotation de l'organe de transmission.

Le couvercle 2 est destiné à être couplé en rotation directement ou indirectement avec le vilebrequin du moteur à combustion interne 7 d'un véhicule automobile, illustré schématiquement aux figures 3 et 4.

Un rotor 37 d'une machine électrique est couplé en rotation, via un support 38 par exemple, à l'arbre d'entrée 10 de la boîte de vitesses 10a. Un tel couplage peut être assuré par tous moyens.

La machine électrique est par exemple une machine électrique tournante réversible du type alterno-démarreur ou du type moteur-générateur.

Un couvercle additionnel 39 peut être prévu, ledit couvercle additionnel 39 logeant le couvercle 2 et la butée d'embrayage 21. Le couvercle additionnel 39 comporte ici une partie radiale 40 avant, annulaire et entourant l'arbre d'entrée 10, dont la périphérie radialement externe est prolongée vers l'arrière par une partie axiale 41.

En fonctionnement, l'organe d'actionnement 23 et le diaphragme 18 peuvent être déplacés entre plusieurs positions axiales, comme cela est représenté respectivement aux figures 3 et 4.

La figure 3 illustre un premier mode de fonctionnement et/ou un deuxième mode de fonctionnement.

En particulier, dans un premier mode de fonctionnement, l'organe d'actionnement 23 est déplacé vers l'avant, c'est-à-dire vers la droite sur ladite figure. Ainsi, dans ce mode de fonctionnement, l'organe d'actionnement 23 ne repousse pas le diaphragme 18 vers sa position embrayée. En d'autres termes, le diaphragme 18 est rappelé, du fait de son élasticité, vers sa position débrayée.

Par ailleurs, dans le premier mode de fonctionnement, l'arbre 10, l'organe de transmission 28 et la seconde partie 30 du mécanisme de roue libre pivotent dans le second sens de rotation (sens dit rétro) par rapport au couvercle 2, à l'organe de liaison 24 et à la première partie 26 du mécanisme de roue libre de sorte que ledit mécanisme de roue libre ne transmet aucun couple entre ses première et seconde parties 26, 30.

Dans ce mode de fonctionnement, le vilebrequin 7 et le couvercle 2 sont découplés de l'arbre d'entrée 10 de la boîte de vitesses 10a et du rotor 37 de la machine électrique.

L'arbre d'entrée 10 de la boîte de vitesses 10a et le rotor 37 de la machine électrique restent couplés en rotation. Dans un tel mode de fonctionnement, la machine électrique peut alors être apte à entraîner l'arbre d'entrée 10 de la boîte de vitesses 10a, et donc le véhicule, au moins sur une courte distance.

Dans un deuxième mode de fonctionnement illustré également par la figure 3, l'organe d'actionnement 23 reste déplacé vers l'avant, c'est-à-dire vers la droite sur ladite figure. Ainsi, dans le deuxième mode de fonctionnement, l'organe d'actionnement 23 ne repousse pas le diaphragme 18 vers sa position embrayée. En d'autres termes, le diaphragme 18 est rappelé, du fait de son élasticité, vers sa position débrayée.

Par ailleurs, dans le deuxième mode de fonctionnement, l'arbre 10, l'organe de transmission 28 et la seconde partie 30 du mécanisme de roue libre pivotent dans le premier sens de rotation (sens dit direct) par rapport au couvercle 2, à l'organe de liaison 24 et à la première partie 26 du mécanisme de roue libre de sorte que ledit mécanisme de roue libre permet de transmettre le couple entre ses première et seconde parties 26, 30.

Le vilebrequin du moteur à combustion interne 7 est alors couplé en rotation à l'arbre d'entrée 10 de la boîte de vitesses 10a, par l'intermédiaire du couvercle 2, de l'organe de liaison 24 et de l'organe de transmission 28.

Le passage de couple est ainsi réalisé de façon directe entre le vilebrequin et l'arbre d'entrée 10 de la boîte de vitesses 10a, c'est-à-dire sans utilisation de moyens d'embrayage.

Un tel mode de fonctionnement peut notamment être utilisé pour entraîner l'arbre d'entrée 10 de la boîte de vitesses 10a à l'aide du moteur à combustion interne 7, lorsque celui-ci est démarré. Dans un tel cas, la machine électrique peut fonctionner en mode générateur ou alternateur, afin de recharger une batterie du véhicule et/ou d'alimenter les organes ou équipements consommateurs d'énergie lorsque le moteur à combustion interne 7 tourne. La machine électrique peut en outre être configurée pour récupérer de l'énergie lors du freinage du véhicule.

Dans ce mode de fonctionnement également, la machine électrique est apte à fournir un surplus de puissance permettant d'éviter que le moteur à combustion interne 7 cale (fonction boost en Anglais).

La figure 4 illustre un troisième mode de fonctionnement dans lequel le l'organe d'actionnement 23 est déplacé vers l'arrière, c'est-à-dire vers la gauche sur ladite figure.

Par ailleurs, dans le troisième mode de fonctionnement, l'arbre 10, l'organe de transmission 28 et la seconde partie 30 du mécanisme de roue libre pivotent dans le second sens de rotation (sens dit rétro) par rapport au couvercle 2, à l'organe de liaison 24 et à la première partie 26 du mécanisme de roue libre de sorte que ledit mécanisme de roue libre ne transmet aucun couple entre ses première et seconde parties 26, 30.

Dans le troisième mode de fonctionnement, l'organe pousseur 32 est déplacé vers l'arrière par l'organe d'actionnement 23 de sorte que le palier 33 vient actionner le diaphragme 18 de manière à le déplacer vers sa position embrayée dans laquelle il rapproche axialement les plateaux 12 de la partie radiale 3 du couvercle 2. De cette manière, les disques de friction 11 sont enserrés entre les plateaux 12 et le couvercle 2 est couplé en rotation à l'arbre d'entrée 10 de la boîte de vitesses10a par l'intermédiaire des plateaux 12, des disques de friction 11 et du moyeu central 8.

En d'autres termes, dans cette position, le rotor 37 de la machine électrique est couplé en rotation au vilebrequin du moteur à combustion interne 7, par l'intermédiaire des moyens d'embrayage précités.

Un tel mode de fonctionnement peut notamment être utilisé dans le cas où l'on souhaite redémarrer le moteur à combustion interne 7 à l'aide de la machine électrique qui fonctionne alors en mode moteur (Fonction Stop and Go, en anglais). L'arrêt du moteur à combustion interne 7 peut notamment être commandé lors d'un arrêt de courte durée du véhicule, par exemple dans le cas d'un feu rouge ou dans des bouchons.

Dans ce cas, le couple généré par le rotor 37 de la machine électrique est transmis à l'arbre d'entrée 10 de la boîte de vitesses 10a par l'intermédiaire du support 38, puis au vilebrequin 7 par l'intermédiaire du couvercle 2 et des moyens d'embrayage précités. On peut alors contrôler efficacement le couple transmis au vilebrequin 7, de façon à éviter toute détérioration du moteur thermique 7 et du dispositif de transmission de couple 1.

L'invention propose ainsi un dispositif de transmission de couple fiable, peu encombrant axialement et radialement, peu complexe et peu onéreux, par comparaison avec l'art antérieur.

## Revendications

1. Dispositif (1) de transmission de couple, notamment pour véhicule automobile, comportant :
- des moyens d'entrée de couple (2), destinés à être couplés en rotation à un vilebrequin d'un moteur à combustion interne (7),
- des moyens de sortie de couple (8), destinés à être couplés en rotation à un arbre d'entrée (10) d'une boîte de vitesses (10a) et à un rotor (37) d'une machine électrique, les moyens d'entrée de couple (2) étant aptes à pivoter par rapport aux moyens de sortie de couple autour d'un axe (X),
- des moyens d'embrayage comportant une alternance de plateaux (12) et de disques de friction (11) ainsi qu'un diaphragme (18) apte à basculer entre une position embrayée dans laquelle il tend à enserrer les disques de friction (11) entre les plateaux (12), et une position débrayée dans laquelle il libère les disques de friction (11),
- une butée d'embrayage (21) comportant un organe d'actionnement (23) mobile entre une première position axiale et une seconde position axiale, l'organe d'actionnement (23) est en appui sur le diaphragme (18) par l'intermédiaire d'au moins un organe pousseur (32), l'organe pousseur (32) étant monté axialement entre deux paliers (33, 34),
le dispositif comporte un mécanisme de roue libre comportant une première partie (26) et une seconde partie (30), ledit mécanisme étant apte à transmettre du couple de la première partie (26) à la seconde partie (30), dans un premier sens de rotation de la première partie (26) par rapport à la seconde partie (30), ledit mécanisme étant apte à découpler en rotation la première partie (26) et la seconde partie (30) dans un sens de rotation, opposé au premier sens de rotation.

2. Dispositif (1) selon la revendication 1, **caractérisé en ce que** :
- dans la première position de l'organe d'actionnement (23) et lors de la rotation de la première partie (26) du mécanisme de roue libre par rapport à la seconde partie (30) dans le second sens de rotation, les moyens d'entrée de couple (2) et les moyens de sortie de couple sont couplés en rotation uniquement par un premier chemin de passage de couple comportant des moyens d'embrayage (11, 12, 18), les moyens d'embrayage comportant une alternance de plateaux et de disques de friction,
- dans la seconde position de l'organe d'actionnement (23) et lors de la rotation de la première partie (26) du mécanisme de roue libre par rapport à la seconde partie (30) dans le premier sens de rotation, les moyens d'entrée de couple (2) et les moyens de sortie de couple sont couplés en rotation uniquement par un second chemin de passage de couple comprenant le mécanisme de roue libre.

3. Dispositif (1) selon la revendication 2, **caractérisé en ce que** l'organe d'actionnement mobile (23) et le mécanisme de roue libre (26, 30) sont agencés de manière à ce que, dans la seconde position de l'organe d'actionnement (23) et lors de la rotation de la première partie (26) du mécanisme de roue libre par rapport à la seconde partie (30) dans le second sens de rotation, les moyens d'entrée de couple (2) et les moyens de sortie de couple (8) sont découplés en rotation.

4. Dispositif selon l'une des revendications 1 à 3, caractérisé en qu'il comporte un organe de transmission (28) comprenant une première zone de couplage (29) destinée à être couplée en rotation à l'arbre d'entrée (10) de la boîte de vitesses (10a), et une seconde zone de couplage (30) couplée à la seconde partie (30) du mécanisme de roue libre, la première partie (26) du mécanisme de roue libre étant couplée aux moyens d'entrée de couple (2).

5. Dispositif (1) selon la revendication 4, **caractérisé en ce que** la première zone de couplage (29) est située radialement à l'intérieur de l'organe de transmission (28), la seconde zone de couplage (30) étant située radialement à l'extérieur de l'organe de transmission (28).

6. Dispositif (1) selon l'une des revendications 1 à 5, **caractérisé en ce que** les disques de friction (11), ou respectivement les plateaux (12), étant couplés en rotation à un moyeu (8) appartenant aux moyens de sortie de couple, les plateaux (12), ou respectivement les disques de friction (11), étant couplés aux moyens d'entrée de couple (2), les plateaux (12) étant rapprochés axialement l'un de l'autre de façon à enserrer les disques de friction (11) lorsque l'organe d'actionnement (23) est déplacé dans sa première position.

7. Dispositif (1) selon l'une des revendications 1 à 6, **caractérisé en ce que** le diaphragme (18) est annulaire, l'organe d'actionnement (23) venant en appui sur la périphérie radialement interne du diaphragme (18) dans la première position axiale, le diaphragme (18) étant monté basculant autour d'une première zone d'appui (19) radialement externe, le diaphragme (18) venant en appui sur l'un des plateaux (12), directement ou indirectement, dans une seconde zone d'appui (17) située radialement à l'intérieur de la première zone d'appui (19).

8. Dispositif (1) selon l'une des revendications 1 à 7, **caractérisé en ce que** les moyens d'entrée de couple comportent un couvercle (2) logeant, au moins en partie, les moyens d'embrayage (11, 12, 18), l'organe d'actionnement (23), l'organe de transmission (28), le mécanisme de roue libre (26, 30) et/le moyeu (8).

9. Dispositif (1) selon la revendication 4 ou 5 et selon la revendication 8, **caractérisé en ce que** les moyens d'entrée de couple comportent un organe de liaison (24) couplé en rotation au couvercle (2), la seconde zone de couplage (30) de l'organe de transmission (28) et l'organe de liaison (24) étant couplés en rotation, par l'intermédiaire du mécanisme de roue libre (26, 30).

10. Dispositif (1) selon l'une des revendications 4 à 9, **caractérisé en ce que** l'organe pousseur (32) traverse axialement un orifice (31) de l'organe de transmission (28), ledit organe pousseur (32) étant apte à être déplacé axialement par rapport audit organe de transmission (28).

11. Système de motorisation hybride comprenant :
- un moteur à combustion interne (7) comportant un vilebrequin apte à être entraîné en rotation autour d'un axe (X),
- une machine électrique comportant un stator et un rotor (37) apte à être entraîné en rotation par rapport au stator autour de l'axe (X),
- une boîte de vitesses (10a) comportant un arbre d'entrée (10),
- un dispositif (1) de transmission de couple selon l'une des revendications 1 à 10, le rotor (37), l'arbre d'entrée (10) de la boîte de vitesses (10a) et les moyens de sortie de couple étant couplés en rotation,
- les moyens d'entrée de couple (2) et le vilebrequin étant couplés en rotation.

## Patentansprüche

1. Vorrichtung (1) zur Drehmomentübertragung, insbesondere für ein Kraftfahrzeug, welche aufweist:
- Drehmomenteingangsmittel (2), die dazu bestimmt sind, mit einer Kurbelwelle einer Brennkraftmaschine (7) drehgekoppelt zu werden,
- Drehmomentausgangsmittel (8), die dazu bestimmt sind, mit einer Eingangswelle (10) eines Getriebes (10a) und mit einem Rotor (37) einer elektrischen Maschine drehgekoppelt zu werden, wobei die Drehmomenteingangsmittel (2) dafür ausgelegt sind, bezüglich der Drehmomentausgangsmittel um eine Achse (X) zu schwenken,
- Kupplungsmittel, die eine Wechselfolge von Platten (12) und von Reibscheiben (11) aufweisen, sowie eine Membran (18), die dafür ausgelegt ist, zwischen einer eingekuppelten Position, in der sie bestrebt ist, die Reibscheiben (11) zwischen den Platten (12) festzuklemmen, und einer ausgekuppelten Position, in der sie die Reibscheiben (11) freigibt, umzuschalten,
- ein Kupplungsausrücklager (21), das ein Betätigungsorgan (23) aufweist, das zwischen einer ersten axialen Position und einer zweiten axialen Position beweglich ist, wobei das Betätigungsorgan (23) über wenigstens ein Schuborgan (32) auf der Membran (18) abgestützt ist, wobei das Schuborgan (32) axial zwischen zwei Lagern (33, 34) angebracht ist,
wobei die Vorrichtung einen Freilaufmechanismus aufweist, der einen ersten Teil (26) und einen zweiten Teil (30) aufweist, wobei der Mechanismus dafür ausgelegt ist, in einer ersten Drehrichtung des ersten Teils (26) bezüglich des zweiten Teils (30) Drehmoment vom ersten Teil (26) auf den zweiten Teil (30) zu übertragen, wobei der Mechanismus dafür ausgelegt ist, in einer zur ersten Drehrichtung entgegengesetzten Drehrichtung den ersten Teil (26) und den zweiten Teil (30) hinsichtlich der Drehung zu entkoppeln.

2. Vorrichtung (1) nach Anspruch 1, **dadurch gekennzeichnet, dass**:
- in der ersten Position des Betätigungsorgans (23) und während der Drehung des ersten Teils (26) des Freilaufmechanismus bezüglich des zweiten Teils (30) in der zweiten Drehrichtung die Drehmomenteingangsmittel (2) und die Drehmomentausgangsmittel ausschließlich über einen ersten Drehmomentübertragungsweg, der Kupplungsmittel (11, 12, 18) aufweist, drehgekoppelt sind, wobei die Kupplungsmittel eine Wechselfolge von Platten und von Reibscheiben aufweisen,
- in der zweiten Position des Betätigungsorgans (23) und während der Drehung des ersten Teils (26) des Freilaufmechanismus bezüglich des zweiten Teils (30) in der ersten Drehrichtung die Drehmomenteingangsmittel (2) und die Drehmomentausgangsmittel ausschließlich über einen zweiten Drehmomentübertragungsweg, der den Freilaufmechanismus umfasst, drehgekoppelt sind.

3. Vorrichtung (1) nach Anspruch 2, **dadurch gekennzeichnet, dass** das bewegliche Betätigungsorgan (23) und der Freilaufmechanismus (26, 30) so gestaltet sind, dass in der zweiten Position des Betätigungsorgans (23) und während der Drehung des ersten Teils (26) des Freilaufmechanismus bezüglich des zweiten Teils (30) in der zweiten Drehrichtung die Drehmomenteingangsmittel (2) und die Drehmomentausgangsmittel (8) drehentkoppelt sind.

4. Vorrichtung nach einem der Ansprüche 1 bis 3, **dadurch gekennzeichnet, dass** sie ein Übertragungsorgan (28) aufweist, das einen ersten Kopplungsbereich (29), der dazu bestimmt ist, mit der Eingangswelle (10) des Getriebes (10a) drehgekoppelt zu werden, und einen zweiten Kopplungsbereich (30), der mit dem zweiten Teil (30) des Freilaufmechanismus gekoppelt ist, umfasst, wobei der erste Teil (26) des Freilaufmechanismus mit den Drehmomenteingangsmitteln (2) gekoppelt ist.

5. Vorrichtung (1) nach Anspruch 4, **dadurch gekennzeichnet, dass** sich der erste Kopplungsbereich (29) radial innerhalb des Übertragungsorgans (28) befindet, während sich der zweite Kopplungsbereich (30) radial außerhalb des Übertragungsorgans (28) befindet.

6. Vorrichtung (1) nach einem der Ansprüche 1 bis 5, **dadurch gekennzeichnet, dass**, wenn die Reibscheiben (11) bzw. die Platten (12) mit einer Nabe (8) drehgekoppelt sind, die zu den Drehmomentausgangsmitteln gehört, während die Platten (12) bzw. die Reibscheiben (11) mit den Drehmomenteingangsmitteln (2) gekoppelt sind, die Platte (12) derart axial aneinander angenähert werden, dass sie die Reibscheiben (11) festklemmen, wenn das Betätigungsorgan (23) in seine erste Position bewegt wird.

7. Vorrichtung (1) nach einem der Ansprüche 1 bis 6, **dadurch gekennzeichnet, dass** die Membran (18) ringförmig ist, wobei das Betätigungsorgan (23) in der ersten axialen Position am radial inneren Umfang der Membran (18) zur Anlage kommt, wobei die Membran (18) schwenkbar um einen radial äußeren ersten Anlagebereich (19) gelagert ist, wobei die Membran (18) in einem zweiten Anlagebereich (17), der sich radial innerhalb des ersten Anlagebereichs (19) befindet, direkt oder indirekt an einer der Platten (12) zur Anlage kommt.

8. Vorrichtung (1) nach einem der Ansprüche 1 bis 7, **dadurch gekennzeichnet, dass** die Drehmomenteingangsmittel eine Abdeckung (2) aufweisen, die wenigstens teilweise die Kupplungsmittel (11, 12, 18), das Betätigungsorgan (23), das Übertragungsorgan (28), den Freilaufmechanismus (26, 30) und die Nabe (8) aufnimmt.

9. Vorrichtung (1) nach Anspruch 4 oder 5 und nach Anspruch 8, **dadurch gekennzeichnet, dass** die Drehmomenteingangsmittel ein Verbindungsorgan (24) aufweisen, das mit der Abdeckung (2) drehgekoppelt ist, wobei der zweite Kopplungsbereich (30) des Übertragungsorgans (28) und das Verbindungsorgan (24) über den Freilaufmechanismus (26, 30) drehgekoppelt sind.

10. Vorrichtung (1) nach einem der Ansprüche 4 bis 9, **dadurch gekennzeichnet, dass** das Schuborgan (32) eine Öffnung (31) des Übertragungsorgans (28) axial durchquert, wobei das Schuborgan (32) dafür ausgelegt ist, bezüglich des Übertragungsorgans (28) axial verschoben zu werden.

11. Hybridantriebssystem, welches umfasst:
- eine Brennkraftmaschine (7), die eine Kurbelwelle aufweist, die dafür ausgelegt ist, um eine Achse (X) drehend angetrieben zu werden,
- eine elektrische Maschine, die einen Stator und einen Rotor (37), der dafür ausgelegt ist, bezüglich des Stators um die Achse (X) drehend angetrieben zu werden, aufweist,
- ein Getriebe (10a), das eine Eingangswelle (10) aufweist,
- eine Vorrichtung (1) zur Drehmomentübertragung nach einem der Ansprüche 1 bis 10, wobei der Rotor (37), die Eingangswelle (10) des Getriebes (10a) und die Drehmomentausgangsmittel drehgekoppelt sind,
- wobei die Drehmomenteingangsmittel (2) und die Kurbelwelle drehgekoppelt sind.

## Claims

1. Torque transmission device (1), notably for a motor vehicle, comprising:
- torque input means (2) intended to be rotationally coupled to a crankshaft of an internal combustion engine (7),
- torque output means (8), intended to be rotationally coupled to an input shaft (10) of a gearbox (10a) and to a rotor (37) of an electrical machine, the torque input means (2) being able to pivot with respect to the torque output means about an axis (X),
- clutch means comprising an alternation of plates (12) and of friction discs (11) as well as a diaphragm (18) able to pivot between an engaged position in which it has a tendency to clamp the friction discs (11) between the plates (12), and a disengaged position in which it releases the friction discs (11),
- a clutch bearing (21) comprising an actuating member (23) able to move between a first axial position and a second axial position, the actuating member (23) bears against the diaphragm (18) via at least one push member (32), the push member (32) being mounted axially between two bearings (33, 34),
- the device comprises a freewheel mechanism comprising a first part (26) and a second part (30), the said mechanism being able to transmit torque from the first part (26) to the second part (30) in a first direction of rotation of the first part (26) with respect to the second part (30), the said mechanism being able to uncouple the first part (26) and the second part (30) in terms of rotation in a direction of rotation that is the opposite to the first direction of rotation.

2. Device (1) according to Claim 1, **characterized in that**:
- when the actuating member (23) is in the first position and when the first part (26) of the freewheel mechanism is rotating with respect to the second part (30) in the second direction of rotation, the torque input means (2) and the torque output means are rotationally coupled only by a first torque transfer path comprising clutch means (11, 12, 18), the clutch means comprising an alternation of plates and of friction discs,
- when the actuating member (23) is in the second position and the first part (26) of the freewheel mechanism is rotating with respect to the second part (30) in the first direction of rotation, the torque input means (2) and the torque output means are rotationally coupled only by a second torque transfer path comprising the freewheel mechanism.

3. Device (1) according to Claim 2, **characterized in that** the mobile actuating member (23) and the freewheel mechanism (26, 30) are arranged in such a way that, when the actuating member (23) is in the second position and when the first part (26) of the freewheel mechanism is rotating with respect to the second part (30) in the second direction of rotation, the torque input means (2) and the torque output means (8) are rotationally uncoupled.

4. Device according to one of Claims 1 to 3, **characterized in that** it comprises a transmission member (28) comprising a first coupling zone (29) intended to be rotationally coupled to the input shaft (10) of the gearbox (10a), and a second coupling zone (30) coupled to the second part (30) of the freewheel mechanism, the first part (26) of the freewheel mechanism being coupled to the torque input means (2).

5. Device (1) according to Claim 4, **characterized in that** the first coupling zone (29) is situated radially on the inside of the transmission member (28), the second coupling zone (30) being situated radially on the outside of the transmission member (28).

6. Device (1) according to one of Claims 1 to 5, **characterized in that**, with the friction discs (11) or, respectively, the plates (12) being rotationally coupled to a hub (8) belonging to the torque output means, the plates (12) or, respectively, the friction discs (11) being coupled to the torque input means (2), the plates (12) being brought axially closer together so as to clamp the friction discs (11) when the actuating member (23) is moved into its first position.

7. Device (1) according to one of Claims 1 to 6, **characterized in that** the diaphragm (18) is annular, the actuating member (23) coming to bear against the radially internal periphery of the diaphragm (18) in the first axial position, the diaphragm (18) being mounted to pivot about a radially external first bearing zone (19), the diaphragm (18) coming to bear on one of the plates (12), directly or indirectly, in a second bearing zone (17) situated radially on the inside of the first bearing zone (19) .

8. Device (1) according to one of Claims 1 to 7, **characterized in that** the torque input means comprise a cover (2) at least partially housing the clutch means (11, 12, 18), the actuating member (23), the transmission member (28), the freewheel mechanism (26, 30) and/the hub (8) .

9. Device (1) according to Claim 4 or 5, and according to Claim 8, **characterized in that** the torque input means comprise a connecting member (24) rotationally coupled to the cover (2), the second coupling zone (30) of the transmission member (28) and the connecting member (24) being rotationally coupled by way of the freewheel mechanism (26, 30).

10. Device (1) according to one of Claims 4 to 9, **characterized in that** the push member (32) passes axially through an orifice (31) in the transmission member (28), the said push member (32) being able to be moved axially with respect to the said transmission member (28).

11. Hybrid drive system comprising:
- an internal combustion engine (7) comprising a crankshaft able to be rotationally driven about an axis (X),
- an electrical machine comprising a stator and a rotor (37) able to be rotationally driven with respect to the stator about the axis (X),
- a gearbox (10a) comprising an input shaft (10),
- a torque transmission device (1) according to one of Claims 1 to 10, the rotor (37), the input shaft (10) of the gearbox (10a) and the torque output means being rotationally coupled,
- the torque input means (2) and the crankshaft being rotationally coupled.
